# EUROPEAN PATENT APPLICATION

(11) **EP 3 453 841 A1**
(43) Date of publication of application: **13.03.2019**
(21) Application number: 18193874.7
(22) Date of filing: 11.09.2018
(51) Int. Cl.: F01D 11/24

(54) **METHODS OF CONTROLLING A POWER TURBINE RUNNING CLEARANCE AND CORRESPONDING GAS TURBINE ENGINE**

(30) Priority: 11.09.2017 US 201715700372
(71) Applicant: United Technologies Corporation, Farmington, CT 06032 (US)
(72) Inventor: EASTWOOD, Jonathan Jeffery, Hartford, CT Connecticut 06119 (US); ENGLEHART, Joseph F., Gastonia, NC North Carolina 28056-8581 (US); PHILBRICK, Graham Ryan, Durham, CT Connecticut 06422 (US)
(74) Representative: Dehns

(57) **Abstract**

A method of controlling a power turbine running clearance between blade tips and a case structure (46) includes the step of adjusting an active clearance control system (40) fluid flow based upon a power turbine speed (N_{PT}) to obtain a desired running clearance in a power turbine (44). Another method of controlling a power turbine running clearance between blade tips and a case structure comprises the steps of regulating the power turbine clearance according to a schedule of a control valve (58) position relative to a power turbine speed; measuring an exhaust gas temperature (EGT); and shifting the schedule upon reaching a first threshold exhaust temperature above a base exhaust gas temperature. The first threshold exhaust temperature is indicative of component deterioration increasing the power turbine running clearance. A gas turbine engine comprises a power turbine arranged fluidly downstream from a gas generator portion and mechanically disconnected from a gas generator portion which provides an air source. The power turbine includes a running clearance between a case structure (46) and at least one stage of blades (50). An active clearance control system includes a manifold (54) arranged about the case structure, a passage (84) fluidly coupling theair source and the manifold, and a control valve configured to regulate a fluid flow through the passage. A controller (60) is in communication with the control valve and configured to command the control valve to a position based upon a power turbine speed to obtain a desired running clearance in a power turbine.

## Description

### BACKGROUND

This disclosure relates to turbomachinery, and more particularly, the disclosure relates to an active clearance control system and method for a gas turbine engine.

Gas turbine engines include a compressor that compresses air, a combustor that ignites the compressed air and a turbine across which the compressed air is expanded. The expansion of the combustion products drives the turbine to rotate, which in turn drives rotation of the compressor.

Gas turbine engines for applications such as helicopters incorporate a power turbine (PT) that is not mechanically coupled to the compressors in the gas generator portion of the gas turbine engine. The power turbine is rotationally driven by expanding gases from the gas generator portion to transmit power to a turboshaft. The turboshaft rotationally drives the helicopter propeller, typically at a constant speed, through a gearbox.

In order to increase efficiency, a clearance between the tips of the blades in the compressor, turbine and power turbine across the outer diameter of the flowpath is kept sufficiently small. This ensures that a minimum amount of air passes between the tips and the outer diameter. Some engines include a blade outer air seal (BOAS) supported by case structure to further reduce tip clearance.

The clearance between the BOAS and the blade tips is sensitive to the temperature of the gas path at different engine conditions. If the BOAS support structure heats up at a faster rate than the rotating blades, the tip clearance could increase and cause a drop in efficiency. Conversely, if the blades heat up at a faster rate than the BOAS support structure, the blades can undesirably rub against the BOAS. As a result, it is difficult to accommodate a consistent tip clearance during different power settings in the engine.

Active clearance control (ACC) systems have been developed to selectively direct cooling fluid at the case structure to more closely control the clearance between the BOAS and blade tips in non-power turbine engines. A simple, effective ACC system is needed for power turbine engines.

### SUMMARY

A method of controlling a power turbine running clearance between blade tips and a case structure according to one disclosed non-limiting embodiment includes the step of adjusting an active clearance control system fluid flow based upon a power turbine speed to obtain a desired running clearance in a power turbine.

In an embodiment of any of the above, the active clearance control system is supplied with compressor bleed air.

In a further embodiment of any of the above, the adjusting step includes varying a position of a control valve.

In a further embodiment of any of the above, the adjusting step is performed according to a schedule which correlates the position to the power turbine speed.

In a further embodiment of any of the above, the power turbine speed relates to a power turbine power setting.

In a further embodiment of any of the above, the adjusting step includes commanding the control valve to the position only upon reaching a discrete power turbine speed.

In a further embodiment of any of the above, the discrete power turbine speed is 100% of an available power turbine speed.

In a further embodiment of any of the above, the discrete power turbine speed is 55% of an available power turbine speed.

In a further embodiment of any of the above, the method includes the step of measuring an exhaust gas temperature and a step of shifting the schedule upon reaching a first threshold exhaust temperature above a base exhaust gas temperature, the first threshold exhaust temperature indicative of component deterioration increasing the power turbine running clearance.

In a further embodiment of any of the above, the power turbine is mechanically disconnected to a gas generator portion of a gas turbine engine.

In a further embodiment of any of the above, the power turbine is mechanically connected to a gearbox that is rotationally coupled to a helicopter propeller.

A gas turbine engine according to another disclosed non-limiting embodiment includes a gas generator portion that provides an air source. A power turbine is arranged fluidly downstream from the gas generator portion. The power turbine is mechanically disconnected from the gas generator portion. The power turbine includes a case structure that surrounds at least one stage of blades. A running clearance is provided between the case structure and the at least one stage of blades. An active clearance control system includes a manifold that is arranged about the case structure. The active clearance control system includes a passage fluidly coupling the air source and the manifold. A control valve is configured to regulate a fluid flow through the passage to the manifold. A controller is in communication with the control valve. The controller is configured to command the control valve to a position based upon a power turbine speed to obtain a desired running clearance in a power turbine.

In an embodiment of any of the above, the gas generator portion includes a compressor section. The power turbine is disconnected from the compressor section.

In a further embodiment of any of the above, the controller includes a schedule that correlates the position to the power turbine speed.

In a further embodiment of any of the above, the power turbine speed relates to a power turbine setting.

In a further embodiment of any of the above, the controller is in communication with an exhaust gas turbine temperature sensor. The controller is configured to shift the schedule upon detecting a first threshold exhaust temperature above a base exhaust gas temperature. The first threshold exhaust temperature is indicative of component deterioration increasing the running clearance.

A method of controlling a power turbine running clearance between blade tips and a case structure according to another disclosed non-limiting embodiment includes the step of regulating the power turbine clearance according to a schedule of control valve position relative to power turbine speed. An exhaust gas temperature is measured. The schedule is shifted upon reaching a first threshold exhaust temperature above a base exhaust gas temperature. The first threshold exhaust temperature is indicative of component deterioration increasing the power turbine running clearance.

In an embodiment of any of the above, the regulating step includes adjusting an active clearance control system fluid flow to a manifold based upon the power turbine speed to obtain a desired running clearance in a power turbine. The adjusting step is performed according to the schedule.

In a further embodiment of any of the above, the power turbine speed relates to a power turbine power setting.

In a further embodiment of any of the above, the adjusting step includes commanding the control valve to the position only upon reaching a discrete power turbine speed.

### BRIEF DESCRIPTION OF THE DRAWINGS

The disclosure can be further understood by reference to the following detailed description when considered in connection with the accompanying drawings wherein:
Figure 1 is a schematic view of a gas turbine engine for use in a helicopter.
Figure 2 is a schematic cross-sectional view through a power turbine and an active clearance control manifold of the gas turbine engine shown in Figure 1.
Figure 3 is a cross-sectional view through a portion of the manifold shown in Figure 2.
Figure 4 is a flow chart illustrating an example method of controlling a blade tip clearance in the power turbine.
Figure 5 is a graph of power turbine clearance closedown versus a fluid flow to the active clearance control manifold.
Figure 6 is a graph of the fluid flow to the active clearance control manifold versus power turbine rotor speed.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible. Like reference numbers and designations in the various drawings indicate like elements.

### DETAILED DESCRIPTION

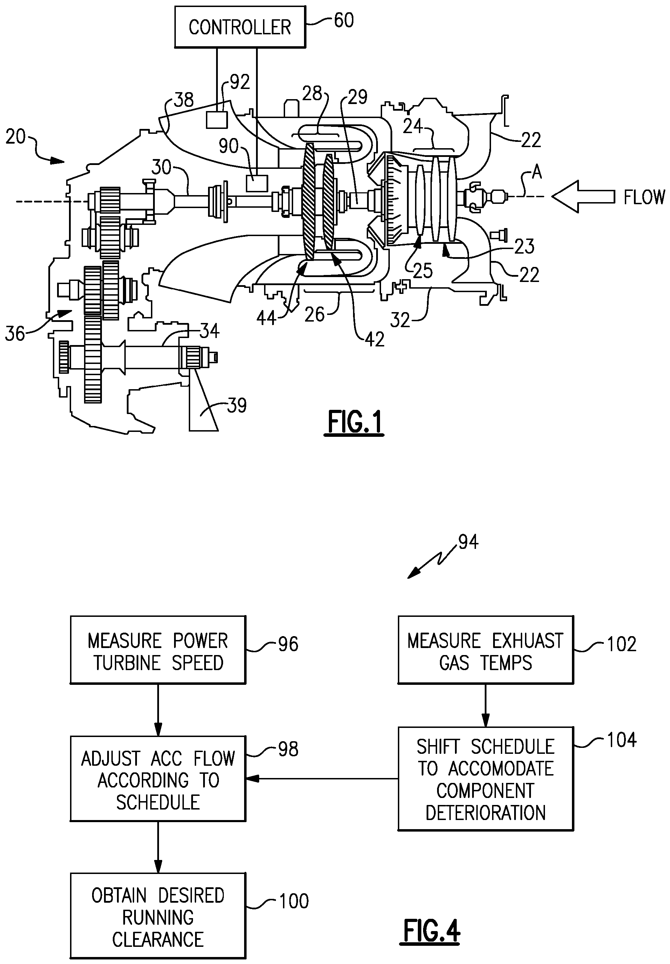

Figure 1 schematically illustrates a gas turbine engine 20. In this example, the engine 20 is a turboshaft engine, such as for a helicopter. The engine 20 includes an inlet duct 22, a compressor section 24, a combustor section 26, and a turbine section 28.

The compressor section 24 is an axial compressor and includes a plurality of circumferentially-spaced blades. Similarly, the turbine section 28 includes circumferentially-spaced turbine blades. The compressor section 24 and the turbine section 28 are mounted on a main shaft 29 for rotation about an engine central longitudinal axis A relative to an engine static structure 32 via several bearing systems (not shown).

During operation, the compressor section 24 draws air through the inlet duct 22. Although gas turbine engines ingest some amount of dust, such engines are typically not designed for highly dusty environments. Engines such as the engine 20 are subject to operating in highly dusty environments during takeoff and landing. In this example, the inlet duct 22 opens radially relative to the central longitudinal axis A. The compressor section 24 compresses the air, and the compressed air is then mixed with fuel and burned in the combustor section 26 to form a high pressure, hot gas stream. The hot gas stream is expanded in the turbine section 28, which may include first and second turbine 42, 44.

The first turbine 42 rotationally drives the compressor section 24 via a main shaft 29. Together these components provide a gas generator portion of the engine 20.

The second turbine 44, which is a power turbine (PT) in the example embodiment, rotationally drives a power shaft 30, gearbox 36, and output shaft 34. Although fluidly coupled to the gas generator portion, the power turbine is mechanically disconnected from the gas generator portion. That is, the main shaft 29 and power shaft 30 are not connected to one another such that the shafts 29, 30 rotate separately and at different speeds. Moreover, there are no compressors mounted to the power shaft 30. The power turbine can be made up of a single or multiple stages of blades and vanes. The output shaft 34 rotationally drives the helicopter rotor blades 39 used to generate lift for the helicopter. The hot gas stream is expelled through an exhaust 38.

The engine 20 also includes a seal system in the turbine section 28 around the blades. Such a seal system may be referred to as a blade outer air seal (BOAS). The seal system serves to provide a minimum clearance around the tips of the blades, to limit the amount of air that escapes around the tips.

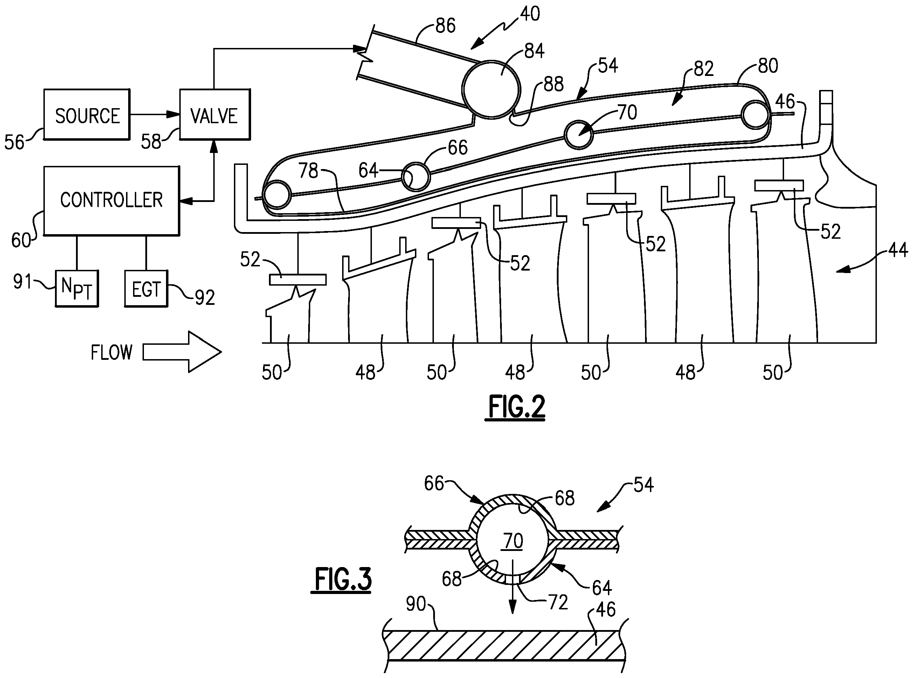

The power turbine 44 is shown in more detail in Figure 2. The power turbine 44 includes stages of stator vanes 48 axially spaced apart from one another and supported with respect to the turbine case structure 46, which is part of the engine static structure 32. Stages of rotor blades 50 are axially interspersed between the stages of stator vanes 48.

Figure 2 illustrates a representative portion of a BOAS 52 of the seal system. The BOAS 52 are supported with respect to the case structure 46 to provide a seal with respect to the tips of the rotor blades 50. As will be appreciated, the BOAS 52 may be an arc segment, a full ring, a split ring that is mounted around the blades 50, or an integration into an engine casing.

An active clearance control (ACC) system 40 includes a source 56 of cooling fluid, which may be bleed air from one of the stages of the compressor section 24, for example, station 2.3 air. Cooling air to the outside of the case may be provided by air, between a low pressure compressor 23 and a high pressure compressor 25 of the compressor section 24, shown in Figure 1. The air source could also be from other sources in the compression system such as behind the fan, such as a first rotating stage of the engine, or from the high pressure compressor. This air has a high enough pressure to provide effective impingement cooling onto the case structure 46 and a low enough temperature to cool the case structure 46 to the desired temperature. The ACC system 40 controls the running tip clearance of the blades 50 by varying the amount of cooling air on the case structure 46.

The cooling fluid is provided to a control valve 58, which is selectively commanded by a controller 60 to maintain a desired clearance between the case structure 46 and the blades 50 to target a specific tip clearance value at a given power turbine speed. The controller 60 and may receive inputs from various temperature sensors or other sensing elements, such as power turbine speed sensor 91 and exhaust gas temperature sensor 92. These relationships may be determined empirically.

The ACC system 40 includes a sheet metal manifold 54 which surrounds the outside of the case structure 46. The manifold 54 blows air on the outside of the case structure 46 in the area directly above a hook connection (not shown), for example, of the BOAS 52 and the case structure 46.

Referring to Figures 2 and 3, an example manifold 54 is shown and may be constructed from several stamped sheet metal elements secured to one another by welds or braze, although other construction techniques may be used. In the example, inner and outer enclosures 78, 80 are joined to one another to form a cavity 82 that receives fluid from the source 56 via a passage including an inlet 86 and a tube 84 connected at a hole 88.

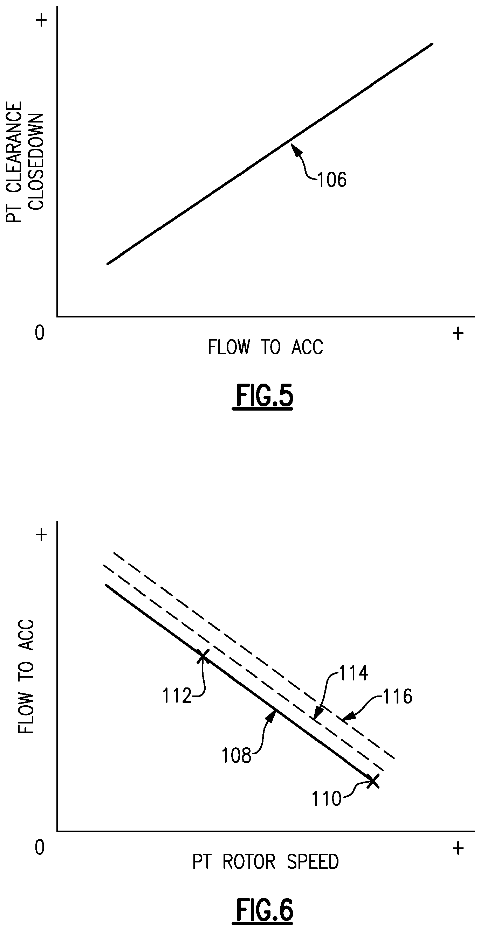

Inner and outer supply conduit portions 64, 66 are joined to one another to form circumferential channels 70 that are in fluid communication with the cavity 82. The circumferential channels 70 in the manifold 54 are axially spaced apart from one another and formed by recesses 68 in each of the inner and outer supply conduit portions 64, 66 that are joined to one another. The circumferential channels 70 include cooling holes 72 facing radially inward and directed at an outer surface 90 of the case structure 46, as best shown in Figure 3. As can be appreciated by reference to the curve 106 in Figure 5, increasing fluid flow onto the surface 90 shrinks the case structure 46, reducing the running clearance. Conversely, reducing fluid flow onto the surface 90 allows the case structure to heat up and expand, increasing the running clearance. Speed also affects running clearances; clearances may increase at lower speeds due to less mechanical growth in the blades.

A simple, efficient ACC system 40 is disclosed uniquely suitable for a power turbine, which typically operates at constant speeds with very few transients. Referring to a control method 94 in Figure 4, the controller 60 is configured to adjust the fluid flow in ACC system 40 based upon the power turbine speed N_{PT} to obtain a desired running clearance in the power turbine 44. The power turbine speed N_{PT} is measured (block 96). In the example, the controller 60 uses a base schedule 108 to operate the control valve 58, as shown in Figure 6, and adjust the flow to the ACC system (block 98). The base schedule correlates the valve position to the power turbine speed N_{PT}. The power turbine speed N_{PT} may be inferred by a power turbine power setting.

Flow supplied by the source 56 is regulated by the control valve 58 to vary the fluid flow through the passage to the manifold 54 and onto the case structure 46, which obtains the desired running clearance (block 100). Typically, the power turbine is operated at a constant speed, for example, 100% of an available power turbine speed (set point 110 in Fig. 6) or 55% of an available power turbine speed (set point 112 in Fig. 6). In one example, rather than move the control valve 58 between an infinitely variable number of positions, the control valve 58 is commanded to a desired position only upon reaching a discrete, constant power turbine speed. The control valve 58 may provide a signal to the controller 60, enabling the controller 60 to confirm that the desired position has been reached.

Increasing exhaust temperatures is typically indicative of component deterioration. As components of the engine 20 become worn, the running clearances tend to increase for the same operating conditions. The controller 60 may use information from the exhaust gas turbine temperature sensor 92 to compensate for component deterioration. Referring again to Figure 4, the exhaust gas temperature at a given power turbine speed is measured (block 102). The controller 60 shifts the base schedule 108 (block 104) to a first schedule 114 (Fig. 6), which shrinks the case structure 46 compared to the base schedule 108, upon detecting a first threshold exhaust temperature above a base exhaust gas temperature. The first threshold exhaust temperature is indicative of component deterioration increasing the running clearance. The controller 60 can shift the first schedule 114 to a second schedule 116 upon detecting a second threshold exhaust temperature above the first exhaust gas temperature, as so on.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A method (94) of controlling a power turbine running clearance between blade tips and a case structure (46), the method (94) comprising the step of adjusting an active clearance control system fluid flow based upon a power turbine speed (N_{PT}) to obtain a desired running clearance in a power turbine (44).

2. The method (94) of claim 1, wherein the adjusting step includes varying a position of a control valve (58).

3. The method (94) of claim 2, wherein the adjusting step is performed according to a schedule, the schedule correlating the control valve position to the power turbine speed (N_{PT}).

4. The method (94) of claim 3, comprising the steps of measuring an exhaust gas temperature (EGT), and shifting the schedule upon reaching a first threshold exhaust temperature (EGT) above a base exhaust gas temperature (EGT), the first threshold exhaust temperature (EGT) being indicative of component deterioration increasing the power turbine running clearance.

5. A method (94) of controlling a power turbine running clearance between blade tips and a case structure (46), the method (94) comprising the step of:
regulating the power turbine clearance according to a schedule of control valve (58) position relative to power turbine speed (N_{PT});
measuring an exhaust gas temperature (EGT); and
shifting the schedule upon reaching a first threshold exhaust temperature (EGT) above a base exhaust gas temperature (EGT), the first threshold exhaust temperature (EGT) indicative of component deterioration increasing the power turbine running clearance.

6. The method (94) of claim 5, wherein the regulating step includes adjusting an active clearance control system fluid flow to a manifold (54) based upon the power turbine speed (N_{PT}) to obtain a desired running clearance in a power turbine (44), and the adjusting step is performed according to the schedule.

7. The method (94) of any of claims 2 to 6, wherein the adjusting step includes commanding the control valve (58) to the position only upon reaching a discrete power turbine speed (N_{PT}).

8. The method (94) of claim 7, wherein the discrete power turbine speed (N_{PT}) is 100% of an available power turbine speed or 55% of an available power turbine speed.

9. The method (94) of any preceding claim, comprising the step of supplying the active clearance control system (40) with compressor bleed air.

10. The method (94) of any preceding claim, wherein the power turbine (44):
is mechanically disconnected to a gas generator portion of a gas turbine engine; and/or
is mechanically connected to a gearbox (36) that is rotationally coupled to a helicopter propeller (39).

11. A gas turbine engine (20) comprising:
a gas generator portion providing an air source;
a power turbine (44) arranged fluidly downstream from the gas generator portion, wherein the power turbine (44) is mechanically disconnected from the gas generator portion, the power turbine (44) includes a case structure (46) surrounding at least one stage of blades (50), and a running clearance is provided between the case structure (46) and the at least one stage of blades (50);
an active clearance control system (40) including a manifold (54) arranged about the case structure (46), the active clearance control system (40) including a passage (84) fluidly coupling the air source and the manifold (54), and a control valve (58) configured to regulate a fluid flow through the passage (84) to the manifold (54); and
a controller (60) in communication with the control valve (58), the controller (60) configured to command the control valve (58) to a position based upon a power turbine speed (N_{PT}) to obtain a desired running clearance in a power turbine (44).

12. The gas turbine engine (20) of claim 11, wherein the gas generator portion includes a compressor section (24).

13. The gas turbine engine (20) of claim 11 or 12, wherein the controller (60) includes a schedule that correlates the control valve position to the power turbine speed (N_{PT}).

14. The gas turbine engine (20) of claim 13, wherein the controller (60) is in communication with an exhaust gas turbine temperature sensor (92), the controller (60) configured to shift the schedule upon detecting a first threshold exhaust temperature (EGT) above a base exhaust gas temperature (EGT), the first threshold exhaust temperature (EGT) being indicative of component deterioration increasing the running clearance.

15. The method (94) or gas turbine engine (20) of any preceding claim, wherein the power turbine speed (N_{PT}) relates to a power turbine power setting.
